# DEMANDE DE BREVET EUROPEEN

(11) **EP 1 275 534 A1**
(43) Date de publication de la demande: **15.01.2003**
(21) Numéro de dépôt: 02013797.2
(22) Date de dépôt: 21.06.2002
(51) Int. Cl.: B60G 3/26, B60G 7/00

(54) **Suspension à carrossage variable pour véhicule automobile**

(30) Priorité: 10.07.2001 FR 0109248; 12.12.2001 FR 0116178
(71) Demandeur: Sociéte de Technologie Michelin, 63000 Clermont-Ferrand Cedex 09 (FR); Michelin Recherche et Technique S.A., 1763 Granges-Paccot (CH)
(72) Inventeur: Aubarede, Francis, 63200 Pontgibaud (FR); Deal, Michel, 03110 Saint Remy-En-Rollat (FR)
(74) Mandataire: Bauvir, Jacques

(57) **Abrégé**

L'invention se rapporte à un dispositif de support destiné à lier une roue (2) à des éléments de suspension (4, 8, 9) d'un véhicule, ledit dispositif de support comprenant un porte-roue (3) et des moyens de carrossage (10) conférant à ladite roue un degré de liberté de carrossage par rapport aux dits éléments de suspension. Les éléments de suspension comprennent un support intermédiaire (4). Les moyens de carrossage comprennent au moins une glissière courbe (10) assujettissant ledit porte-roue (3) au support intermédiaire (4).

## Description

La présente invention concerne la liaison au sol des véhicules, en particulier les dispositifs de suspension, et plus particulièrement le guidage des roues. Les dispositifs de suspension ont deux fonctions principales qui doivent être assurées simultanément à tout moment lors du fonctionnement. La première de ces fonctions est celle de suspendre le véhicule, c'est à dire permettre des oscillations sensiblement verticales de chaque roue en fonction de la charge appliquée à cette roue. La deuxième fonction est de guider la roue c'est à dire contrôler la position angulaire du plan de roue.

On appelle "plan de roue" le plan, lié à la roue, qui est perpendiculaire à l'axe de la roue et qui passe par le centre de l'aire de contact avec le sol. La position angulaire du plan de roue par rapport à la caisse du véhicule est définie par deux angles, l'angle de carrossage et l'angle de braquage. L'angle de carrossage d'une roue est l'angle qui sépare, dans un plan transversal perpendiculaire au sol, le plan de roue du plan médian du véhicule. Cet angle est positif lorsque la partie supérieure de la roue s'écarte du plan médian vers l'extérieur du véhicule, on parle alors couramment de "carrossage" ou de "carrossage positif ". A l'inverse, lorsque cet angle est négatif, on parle de "contre-carrossage" ou de "carrossage négatif". L'angle de braquage d'une roue est l'angle qui sépare, dans un plan horizontal parallèle au sol, le plan de roue du plan médian du véhicule.

Sur la plupart des véhicules, l'angle de carrossage (on emploiera indifféremment « carrossage » ou « angle de carrossage » par la suite) est fixe pour une position particulière de la suspension et du braquage c'est à dire qu'il ne peut théoriquement pas varier indépendamment du débattement de suspension ou du braquage. Cependant, il subit des variations induites par les déformations des éléments constitutifs du dispositif de suspension provoquées par les efforts exercés par le sol sur la roue. Ces variations peuvent être importantes. Par exemple, un véhicule de tourisme courant voit son carrossage varier de plusieurs degrés sous les efforts transversaux développés sur le pneumatique dans une courbe. Cette variation « élastique » du carrossage fait augmenter le carrossage (le carrossage tend vers des valeurs positives) pour la roue extérieure au virage. Inversement, le carrossage diminue (il tend vers des valeurs négatives) pour la roue intérieure au virage. On intègre depuis longtemps ces variations prévisibles dans les compromis de conception ou de réglage des dispositifs de suspension de ces véhicules courants afin de limiter les effets néfastes qu'elles ont sur le fonctionnement de la liaison au sol.

Le carrossage a en effet une grande influence sur le comportement du véhicule et les performances de la liaison au sol. En particulier, les performances d'un pneumatique sont très variables en fonction de la configuration de son aire de contact au sol et cette configuration dépend en grande mesure du carrossage. Ce sont ces variations qui motivent principalement le choix de l'angle de carrossage statique. Ainsi, par exemple, on introduit généralement un carrossage statique négatif important sur un véhicule de compétition afin de compenser les variations dues aux déformations sous effort transversal du pneumatique et des éléments de suspension (pourtant bien plus rigides que sur les véhicules de tourisme) et dues au roulis de la caisse. Cette configuration est à la fois utile et acceptable en compétition car les critères d'adhérence en virage sont prédominants. Au contraire, sur un véhicule de tourisme, une usure réduite des pneumatiques et une grande stabilité en ligne droite ont plus de poids dans le compromis recherché. Pour un véhicule de tourisme, on choisit donc généralement un carrossage statique initial nul ou très faiblement négatif. On s'accommode alors de poussées de dérives réduites, principalement dans les courbes, lorsque les déformations du pneumatique et des éléments de la liaison au sol sous les efforts transversaux voient leurs effets sur le positionnement du plan de roue s'additionner aux effets du roulis du véhicule. En effet, le roulis de la caisse (la caisse s'incline généralement vers l'extérieur de la courbe sous l'effet de la force centrifuge) tend également à incliner les roues par rapport au plan du sol.

Dans le but d'optimiser le carrossage, en particulier lors d'accélérations transversales, on a conçu des dispositifs de suspension dont le carrossage varie en fonction du débattement vertical de la roue. De cette manière, le roulis pris par la caisse du véhicule peut induire une variation utile du carrossage qui vient compenser au moins en partie l'inclinaison de la caisse du véhicule et les déformations décrites plus haut. C'est en particulier le cas des systèmes de suspension dits « multi-bras ». Ces dispositifs exigent une conception et une architecture de véhicule spécifiques, que l'on ne peut pas, pour des raisons d'encombrement et de prix de revient, mettre en oeuvre sur la plupart des véhicules actuels. Ces systèmes ne réagissent qu'à la conséquence (transfert de charge entraînant un débattement asymétrique de suspension et donc le roulis) d'une accélération transversale et non aux efforts qui la provoquent, ce qui retarde l'effet de la correction. De plus, pour permettre une variation suffisante du carrossage, la cinématique de ces systèmes de suspension imposent des déplacements de la position de l'aire de contact par rapport au véhicule et ces variations, appelées « variations de voie » ou « variation de demie voie » peuvent également constituer une gêne. L'amplitude des corrections de carrossage rendues possibles par de tels systèmes est donc relativement limitée lorsque l'on veut respecter le compromis nécessaire à un bon fonctionnement des autres cas de charge comme par exemple le roulage sur route bosselée, le débattement unilatéral ou au contraire simultané.

Du point de vue cinématique, en termes de degrés de liberté, les dispositifs de suspension n'ont en général qu'un degré de liberté (de la roue ou du porte-roue par rapport au véhicule). Ce degré de liberté permet des mouvements de suspension verticale qui, comme on vient de le voir, peuvent être combinés à des variations de carrossage limitées.

On connaît cependant des systèmes où le contrôle du carrossage est actif, c'est-à-dire que les modifications de géométrie sont commandées par des mouvement de vérins, comme décrit, par exemple, dans les documents US 4515390, US 4700972, et DE 19717418. Dans ces systèmes, on a permis au moins un degré de liberté supplémentaire contrôlé par des actionneurs. Ces systèmes sont très particuliers. Ils ne peuvent pas concerner les véhicules les plus courants en particulier à cause de leur encombrement, de leur complexité et de la puissance importante nécessaire aux actionneurs.

Un objectif de l'invention est un dispositif de construction simple, qui autorise un contrôle du carrossage sans apport d'énergie ou avec un apport limité, sensiblement indépendamment des oscillations verticales de la suspension et, plus généralement, des mouvements de la caisse du véhicule, et qui permette de minimiser les variations de voie.

Cet objectif est réalisé par un dispositif de support destiné à lier une roue à des éléments de suspension d'un véhicule, ledit dispositif de support comprenant un porte-roue et des moyens de carrossage conférant à ladite roue un degré de liberté de carrossage par rapport aux dits éléments de suspension, lesdits éléments de suspension comprenant un support intermédiaire et dans lequel lesdits moyens de carrossage comprennent au moins une glissière courbe assujettissant ledit porte-roue audit support intermédiaire. Ce dispositif de support remplace en fait le porte-roue rigide de l'état de la technique. Il réalise une fonction d'articulation du plan de roue par rapport aux éléments connus de la suspension. On entend par « éléments de suspension » les éléments assurant la reprise de charge en conférant le débattement généralement vertical à la roue, comme les bras, les ressorts, les amortisseurs ou les liaisons anti-roulis.

De préférence, ladite glissière courbe est une glissière circulaire comprenant au moins un roulement à billes, à galets et/ou à rouleaux.

Le dispositif de support de l'invention est tel que ladite roue de rayon 'r' étant destinée à reposer au sol par l'intermédiaire d'un aire de contact, lesdits moyens de carrossage sont configurés de manière à ce que ladite roue admette, autour d'une position moyenne, un premier centre instantané de rotation situé dans un intervalle allant de 2.5 r au dessus du sol à r en dessous du sol et de préférence de 0.5 r au dessus du sol à r en dessous du sol et préférentiellement encore sous le plan du sol.

De préférence encore, ledit premier centre instantané de rotation est situé transversalement sous ladite aire de contact.

Selon un mode de réalisation le dispositif de support est configuré de manière à ce qu'il soit proche de l'équilibre dans ladite position moyenne en l'absence d'effort transversal exercé par le sol sur la roue dans l'aire de contact. Cet équilibre peut être un équilibre instable.

De préférence, ledit premier centre instantané de rotation est situé sensiblement dans le plan de la roue.

De préférence, ledit support intermédiaire est constitué par l'un desdits éléments de suspension, par exemple par une jambe de force d'un système de suspension MacPherson.

Le dispositif de support selon l'invention peut comporter en outre des moyens de contrôle aptes à influencer le carrossage de la roue. Ces moyens de contrôle peuvent comprendre un élément élastiquement déformable s'opposant au mouvement de carrossage.

L'invention concerne également un dispositif de suspension pour véhicule comprenant le dispositif de support décrit ci-dessus.

Ce dispositif de suspension, qui est destiné à relier un porte-roue à une caisse d'un véhicule, le porte-roue étant destiné à porter une roue de rayon 'r' et la roue étant destinée à reposer au sol par l'intermédiaire d'une aire de contact, comporte des moyens conférant au porte-roue, par rapport à la caisse, un degré de liberté de carrossage et un degré de liberté de débattement de suspension indépendants l'un de l'autre, le dispositif de suspension étant configuré de manière à ce que le mouvement de carrossage du porte-roue par rapport à la caisse admette, autour d'une position moyenne, un deuxième centre instantané de rotation situé dans un intervalle allant de 0.5 r au dessus du sol à r en dessous du sol. Le dispositif de suspension de l'invention comporte deux degrés de liberté permettant des mouvements de suspension et de carrossage sensiblement indépendants. Le mouvement de carrossage de la roue (ou du porte-roue) s'effectue autour d'un deuxième centre instantané de rotation situé à une distance limitée de l'aire de contact afin de limiter les variations de voie lors de la prise de carrossage ou de contre-carrossage et de limiter l'apport d'énergie nécessaire dans le cas d'un contrôle actif du carrossage.

Dans un mode de réalisation préféré, ledit deuxième centre instantané de rotation est situé dans un intervalle allant de 0.2 r au dessus du sol à 0.4 r en dessous du sol et préférentiellement encore, de 0.1 r au dessus du sol à 0.3 r en dessous du sol.

Afin d'assurer un fonctionnement stable, le dispositif est, de préférence, configuré de manière à ce qu'il soit proche de l'équilibre dans ladite position moyenne en l'absence d'effort transversal exercé par le sol sur la roue dans l'aire de contact et préférentiellement encore, configuré de manière à ce que, en l'absence de variations de carrossage, l'effort transversal exercé par le sol sur la roue dans l'aire de contact généré au cours du débattement de suspension ne dépasse pas une limite correspondant à 0.3 P, « P» étant le poids du véhicule.

Pour permettre un fonctionnement passif, ledit deuxième centre instantané de rotation du mouvement du porte-roue par rapport à la caisse du véhicule peut être de préférence situé sous le plan du sol afin que des efforts transversaux exercés par le sol sur la roue dans l'aire de contact induisent une inclinaison du porte-roue par rapport à la caisse dans le sens d'une diminution de carrossage lorsque lesdits efforts transversaux sont dirigés vers l'intérieur du véhicule et dans le sens d'une augmentation de carrossage lorsque lesdits efforts transversaux sont dirigés vers l'extérieur du véhicule. Dans ce cas de fonctionnement passif lié aux efforts transversaux, le dispositif peut comporter un moyen de mesure du mouvement de carrossage du porte-roue afin d'en déduire lesdits efforts transversaux.

Dans certaines conditions, il peut être nécessaire ou intéressant de prévoir en outre des moyens de contrôle aptes à influencer le carrossage de la roue. Ces moyens peuvent comprendre un élément élastiquement déformable s'opposant au mouvement de carrossage, l'élément déformable étant constitué par exemple par un ressort métallique ou élastomère.

De préférence ledit degré de liberté de carrossage peut être contrôlé par un moyen actif en fonction de paramètres de roulage dudit véhicule.

Enfin, l'invention concerne un véhicule équipé d'un tel dispositif de suspension.

Plusieurs modes de réalisation de l'invention vont être décrits afin d'en illustrer les caractéristiques et d'en exposer les principes. Naturellement, de nombreux autres modes de réalisation de l'invention sont possibles comme le suggèrent les nombreuses variantes présentées.
- Fig 1: schéma de principe en vue longitudinale d'un dispositif de support et de suspension selon l'invention.
- Fig 2: vue en coupe d'un dispositif de support selon un premier mode de réalisation de l'invention,
- Fig 3: vue transversale partielle du dispositif de la figure 2.
- Fig 4 et 5: vues en coupe du dispositif des figures 2 et 3 lorsqu'il est soumis à un effort transversal,
- Fig 6: vue transversale partielle d'un deuxième mode de réalisation du dispositif de support selon l'invention,
- Fig 7: vue en coupe radiale d'un premier mode de réalisation d'une glissière selon l'invention,
- Fig 8: vue en coupe transversale de la glissière de la figure 7,
- Fig 9: vue en coupe radiale d'un deuxième mode de réalisation d'une glissière selon l'invention,
- Fig 10: vue en coupe transversale d'un troisième mode de réalisation d'une glissière selon l'invention,
- Fig 11: vue en coupe radiale d'un quatrième mode de réalisation d'une glissière selon l'invention,
- Fig 12: vue en coupe transversale de la glissière de la figure 11,
- Fig 13: vue en coupe d'un dispositif de suspension selon un autre mode de réalisation de l'invention,
- Fig 14: vue en coupe d'un véhicule selon l'invention,
- Fig 15: schéma de principe d'un dispositif de support et de suspension selon un autre mode de réalisation de l'invention.
- Fig 16: vue similaire à la figure 1 d'une variante supplémentaire de l'invention.

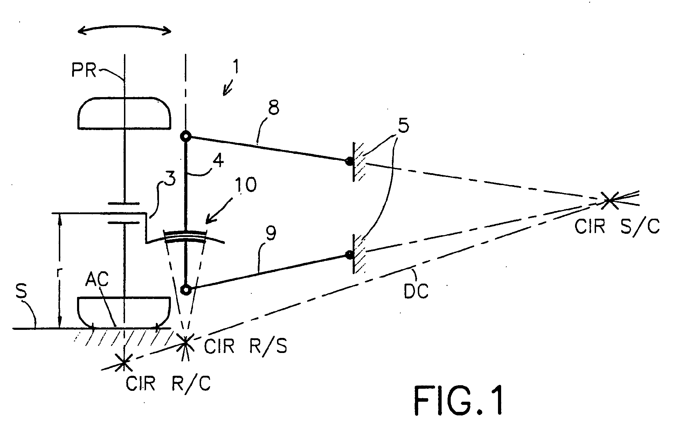

La figure 1 représente en vue longitudinale plane le principe d'un dispositif de suspension selon l'invention. Cette représentation plane (c'est à dire en 2 dimensions) est très commode car elle montrent bien ce en quoi le dispositif selon l'invention se distingue des dispositifs de l'état de la technique.

Le dispositif de suspension 1 comprend un porte-roue 3 destiné à maintenir le plan PR d'une roue 2, par rapport à la caisse 5 d'un véhicule. La roue, de rayon « r », est en appui sur le sol S par l'intermédiaire de son aire de contact AC. Le porte-roue 3 est lié à la caisse 5 par des moyens (4, 8, 9, 10) lui permettant deux degrés de liberté. En effet, le porte-roue 3 est assujetti au support intermédiaire 4 au moyen d'une glissière courbe 10 qui autorise un mouvement de carrossage du porte-roue 3 et donc de la roue 2 par rapport aux éléments de suspension (4, 8, 9). Le mouvement de débattement de suspension est quant à lui permis de manière connue par une liaison du support intermédiaire 4 avec la caisse 5 par des bras (ou des triangles) supérieur 8 et inférieur 9. Ainsi, le dispositif de suspension 1 est configuré de manière à conférer au porte-roue 3, par rapport à la caisse 5, un degré de liberté de carrossage puisque le porte-roue peut s'incliner par rapport à la caisse et un degré de liberté de débattement de suspension puisque le porte-roue peut effectuer des mouvements sensiblement verticaux de façon connue en soi, par exemple à la manière des systèmes « multi-bras » ou « double triangle ». Ces deux degrés de liberté sont indépendants. En effet, les mouvements de suspension peuvent avoir lieu sans conséquence sur le mouvement de carrossage et réciproquement.

Le mouvement du porte-roue 3 ou du plan PR de la roue 2 relativement au support intermédiaire 4 admet un premier centre instantané de rotation (CIR R/S) qui correspond au centre de courbure de la glissière courbe 10. Ce centre de courbure peut être fixe (unique) si la glissière est circulaire ou variable en fonction de la position de la glissière si la courbure de la glissière n'est pas constante.

Le mouvement de carrossage du porte-roue 3 par rapport à la caisse 5 admet un deuxième centre instantané de rotation (CIR R/C) dont nous allons maintenant déterminer la position.

Le mouvement de débattement de suspension du support intermédiaire 4 par rapport à la caisse 5 du véhicule admet un troisième centre instantané de rotation (CIR S/C) qui est déterminé à tout moment par la géométrie des éléments de suspension liant le support intermédiaire 4 à la caisse 5.

En appliquant l'hypothèse classiquement admise d'une liaison ponctuelle de la roue 2 sur le sol S, la théorie de la colinéarité des centres instantanés de rotation dans un mouvement plan permet de situer le deuxième centre instantané de rotation (CIR R/C) du mouvement de carrossage à l'intersection du plan de roue PR et de la droite DC portant les premier (CIR R/S) et troisième (CIR S/C) centres instantanés de rotation. Cette théorie cinématique est d'usage courant dans le domaine de la liaison au sol. On comprend alors que c'est le choix de la configuration géométrique, c'est à dire des dimensions et de l'orientation des différents éléments constitutifs du dispositif de suspension qui (en définissant les positions des axes et des points caractéristiques) permet d'obtenir une position voulue du deuxième centre instantané de rotation (CIR R/C) du mouvement de carrossage de la roue par rapport à la caisse sous effort transversal. La figure 1 représente le dispositif de suspension dans une position moyenne, que l'on pourrait définir comme la position correspondant au roulage en ligne droite sur un sol (S) plat, le véhicule portant sa charge nominale. Le carrossage statique est représenté ici sensiblement nul. Cette figure montre le fonctionnement cinématique du dispositif de l'invention. L'équilibre statique des efforts subis par le système (poids du véhicule, efforts du sol sur la roue, ressorts de suspension) doit être naturellement assuré par la conception du système. La charge verticale appliquée aux éléments de suspension est reprise de façon connue par exemple par un ressort prenant appui entre la caisse 5 et le support intermédiaire 4 ou l'un des bras ou triangles (8, 9). De manière à contrôler l'angle de carrossage statique, la position du porte-roue 3 relativement au support intermédiaire 4 ou à la caisse 5 peut également être influencée par un élément élastique additionnel (non représenté). Le dispositif de support de l'invention comprend le porte-roue 3 et la glissière 10, il constitue une partie du dispositif de suspension de l'invention.

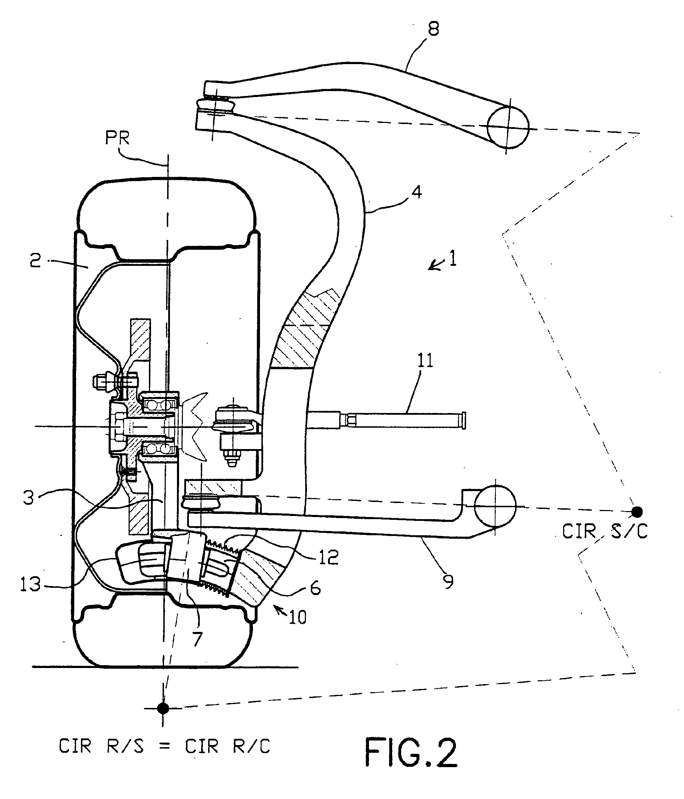

La figure 2 représente, en coupe selon un plan vertical comprenant l'axe de la roue 2, un mode de réalisation du dispositif de support et du dispositif de suspension (1) de l'invention. Le support intermédiaire 4 est lié à la caisse par un bras (ou triangle) supérieur 8 et par un bras (ou triangle) inférieur 9 conférant à la roue 2 son mouvement de débattement de suspension. Le porte-roue 3 est assujetti au support intermédiaire 4 par une glissière 10. Cette glissière comprend un guide 6 en arc de cercle solidaire du support intermédiaire 4 et un élément guidé 7 solidaire du porte-roue 3. Ainsi, le premier centre instantané de rotation (CIR R/S) du mouvement du porte-roue 3 relativement au support intermédiaire 4 est fixe par rapport à ce dernier et correspond à la position du centre de courbure du guide circulaire 6. De plus, dans cette réalisation particulière, ce premier centre instantané de rotation se trouve sous l'aire de contact AC, et sensiblement dans le plan de roue PR. En vertu du principe de colinéarité énoncé plus haut, le deuxième centre instantané de rotation de carrossage (CIR R/C) est confondu avec le premier puisque celui ci se situe également dans le plan de roue.

Cette configuration préférée présente un équilibre statique parfait du point de vue du carrossage, car le dispositif de suspension est en équilibre dans sa position de carrossage moyen en l'absence d'effort transversal exercé par le sol S sur la roue dans l'aire de contact. Dans la pratique, compte tenu en particulier de la raideur du pneumatique, une configuration qui est proche de cet équilibre théorique peut être satisfaisante en terme de fonctionnement. Des expérimentations ont montré que lorsque la position du premier centre instantané de rotation (CIR R/S) par rapport au centre de la roue forme un angle inférieur à 15° avec le plan de la roue PR, cette condition peut être satisfaite.

Comme on vient de le voir, en l'absence de raideurs dans les différentes liaisons, l'équilibre statique parfait est assuré lorsque le premier centre instantané de rotation (CIR R/S) se situe exactement dans le plan de roue. Cependant; l'équilibre dynamique, c'est à dire l'équilibre du système lorsque le véhicule se déplace, est influencé par des efforts liés au roulage du pneumatique. Par exemple, il est bien connu que du fait de sa construction ou son architecture, un pneumatique développe lorsqu'il roule une poussée transversale. L'importance de cette poussée est généralement liée à la vitesse de rotation du pneumatique. Ainsi, on peut choisir de positionner le premier centre instantané de rotation (CIR R/S) à quelques millimètres du plan de roue de sorte que le couple généré par la charge verticale compense le couple généré par cette poussée transversale au moins pour une vitesse de rotation donnée.

La figure 2 représente (partiellement) l'extrémité côté roue d'une transmission ainsi qu'une bielle de direction 11 contrôlant l'orientation du support intermédiaire 4 autour de l'axe de pivot constitué par les points de liaison des bras 8 et 9 avec le support intermédiaire 4. A la vue de cet exemple de roue à la fois motrice et directrice on comprend bien que l'invention peut s'appliquer à toutes les combinaisons, que la roue soit une roue avant, arrière, motrice ou non, directrice ou non du véhicule. Sur cet exemple, la glissière 10 est isolée par un soufflet 12 et un capot 13 afin de la protéger de l'extérieur et en particulier de la poussière, de l'humidité et de l'environnement thermique.

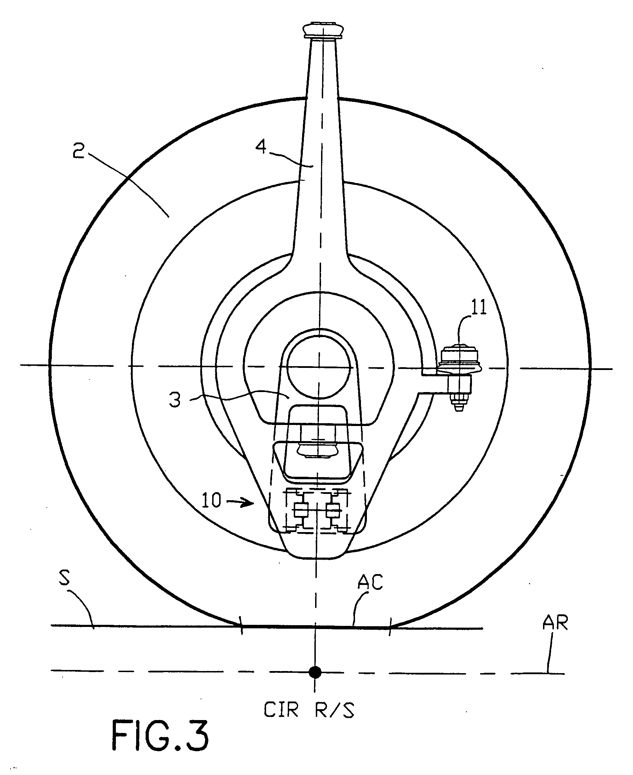

La figure 3 représente les éléments spécifiques du dispositif de suspension de la figure 2 en vue transversale au véhicule, c'est à dire en projection selon l'axe de la roue. Ces éléments sont le porte-roue 3 et la glissière courbe 10 qui relie le porte-roue 3 au support intermédiaire 4. La forme du support intermédiaire 4 doit lui conférer une bonne rigidité tout en autorisant, le cas échéant, le passage d'une transmission (non représentée sur cette vue) et le débattement de braquage vis à vis du bras ou triangle inférieur 9 (également omis sur cette figure). Des contraintes similaires régissent la conception du porte-roue 3. La glissière 10 est ici simplement schématisée par son profil pour une meilleure lecture de la figure. On a représenté l'axe AR de la rotation du porte-roue relativement au support intermédiaire. Cet axe est l'axe de courbure de la glissière. Cet axe AR est fixe par rapport au support intermédiaire 4 et au porte-roue 3 lorsque la glissière 10 est circulaire comme c'est le cas dans ce mode de réalisation de l'invention. L'orientation de l'axe AR, représentée horizontale sur cette figure peut être inclinée si l'on souhaite obtenir d'autres effets associés au carrossage comme on le verra plus loin.

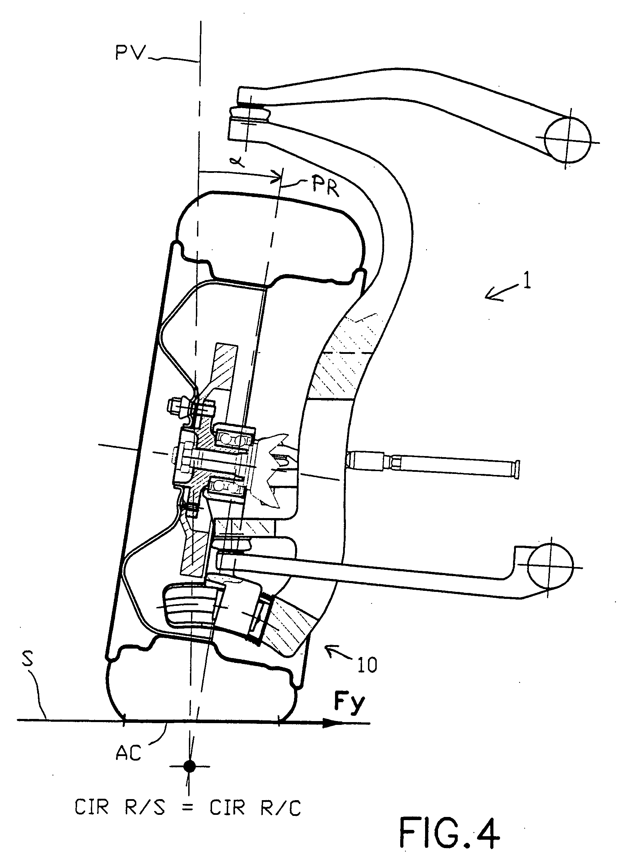

La figure 4 représente le mode de réalisation de la figure 2 lorsque la roue 2 est soumise dans l'aire de contact AC à un effort dont la composante transversale Fy est orientée vers l'intérieur du véhicule. C'est le cas d'une roue qui se trouve du côté extérieur à une trajectoire courbe suivie par le véhicule. Le fait que le deuxième centre instantané de rotation (CIR R/C) du mouvement de carrossage se situe sous le plan du sol S implique que la composante Fy génère un couple qui tend à faire pivoter le porte-roue (et donc le plan de roue PR) vers l'intérieur de la courbe. Cette rotation se fait dans le sens du contre-carrossage (c'est à dire que l'angle de carrossage α diminue, il tend vers des valeurs négatives).

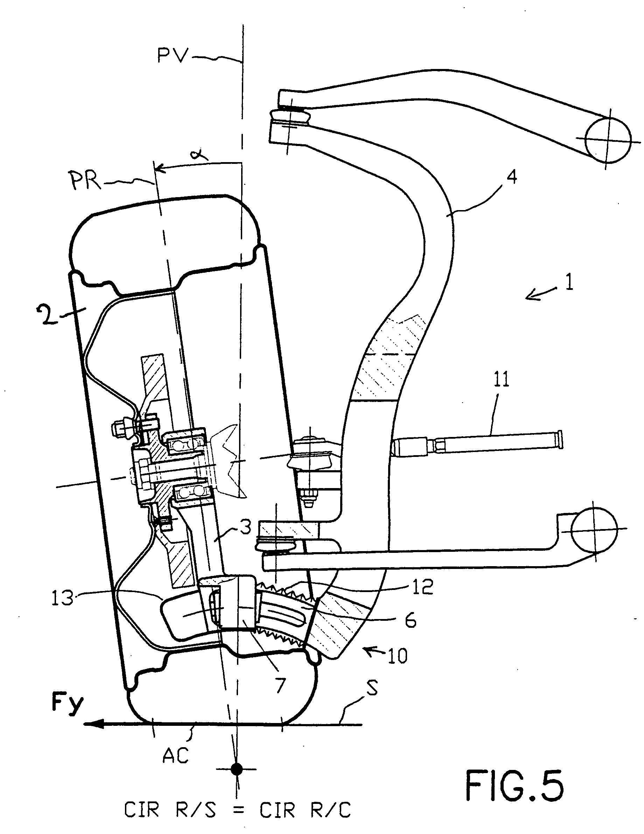

Inversement, comme cela est représenté à la figure 5, lorsque la roue 2 est soumise dans son aire de contact AC à un effort dont la composante transversale Fy est orientée vers l'extérieur du véhicule (c'est le cas d'une roue qui se trouve du côté intérieur à une trajectoire courbe suivie par le véhicule) la composante Fy génère un couple qui tend à faire pivoter le porte-roue dans le sens d'une augmentation de carrossage (c'est à dire que l'angle de carrossage α augmente, il tend vers des valeurs positives). En comparant ces deux figures, on voit bien le mouvement de carrossage de la roue ou du porte-roue qui est permis par l'invention. On visualise également la fonction d'isolation assurée par le soufflet 12 et la capot 13. Ces moyens de protection peuvent avoir une fonction supplémentaire, celle d'introduire une résistance au mouvement de carrossage. En effet le soufflet peut constituer ou intégrer un ressort ou une butée afin d'influencer ou de limiter les excursions du porte-roue 3 par rapport au support intermédiaire 4. De ce fait, le soufflet peut constituer un moyen de réglage du comportement du dispositif de l'invention. De même, un élément déformable ou un butée peut être intégré au capot 13 dans le même but.

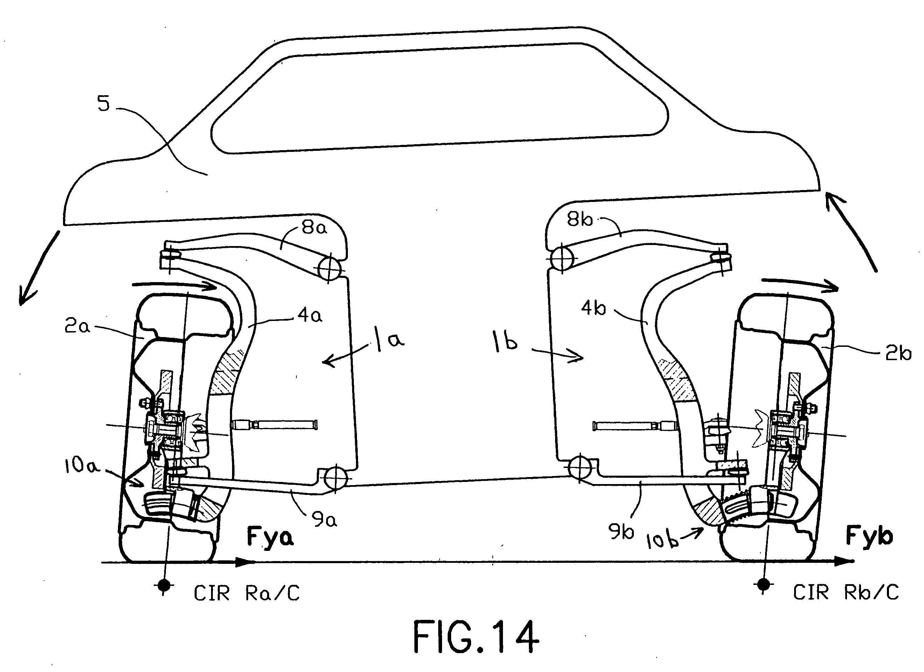

Les figures 4 et 5 représentent, pour la commodité, la variation de carrossage de la roue générée par un effort transversal Fy dans le cas d'un véhicule dont la caisse reste immobile. Cette variation de carrossage est directement liée au fonctionnement du dispositif de support. En réalité, sur la plupart des véhicules actuels, un effort transversal génère également un roulis de la caisse. Le roulis est un mouvement de débattement de suspension opposé de chaque roue de l'essieu qui fait que la caisse s'incline vers l'extérieur du virage. Cette inclinaison de la caisse tend à incliner également le plan de roue vers l'extérieur du virage (lire plus haut). Dans ce cas, l'inclinaison de la roue générée par le roulis est bien sûr en sens opposé au carrossage représenté sur les figures. Ainsi, strictement, la variation illustrée sur les figures 4 et 5 est à considérer relativement à la caisse, c'est à dire au plan PV lié à la caisse. Pour connaître la position de la roue relativement au sol, il faut intégrer la variation induite par le roulis (et également par les déformations des différents éléments de la liaison au sol). Cette situation est représentée à la figure 14.

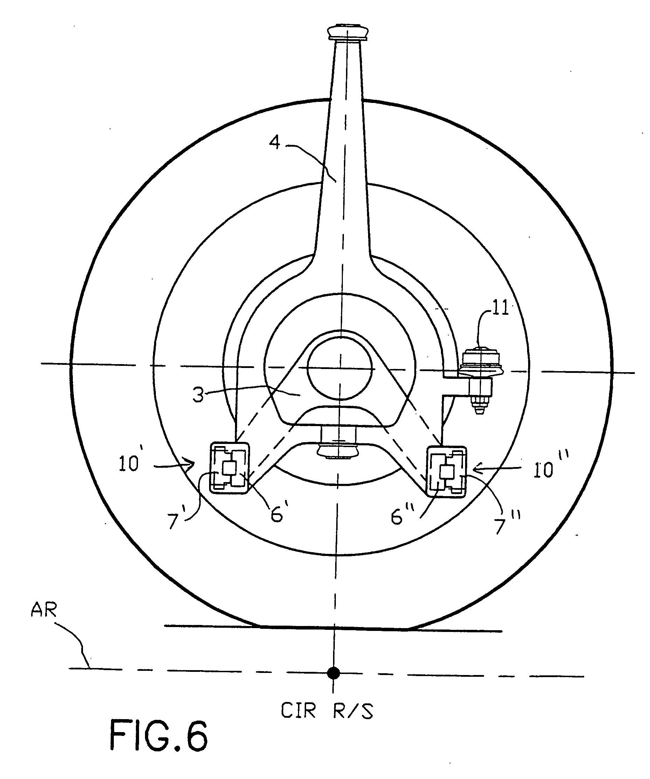

La figure 6 représente un deuxième mode de réalisation du dispositif de support des figures 2 à 5 selon une vue identique à celle de la figure 3. La différence avec le mode de réalisation décrit plus haut réside dans l'articulation du porte-roue 3 par rapport au support intermédiaire 4. En effet, ce mode de réalisation comporte deux glissières courbes distinctes et distantes (10', 10"). Chacune de ces glissières est constituée d'un guide (respectivement 6' et 6") et d'un élément guidé (respectivement 7' et 7"). Les deux guides 6' et 6" ont une courbure identique sur cet exemple. Il s'agit de guides circulaires dont les courbures ont un axe AR commun. Le porte-roue 3 est donc assujetti au support intermédiaire 4 par une liaison pivot selon l'axe AR de la même manière que dans le premier mode de réalisation. Des conséquences avantageuses de cette architecture dédoublée peuvent être la réduction des contraintes appliquées aux glissières, la rigidité du guidage de la roue, l'augmentation de la garde au sol ou un encombrement radial réduit.

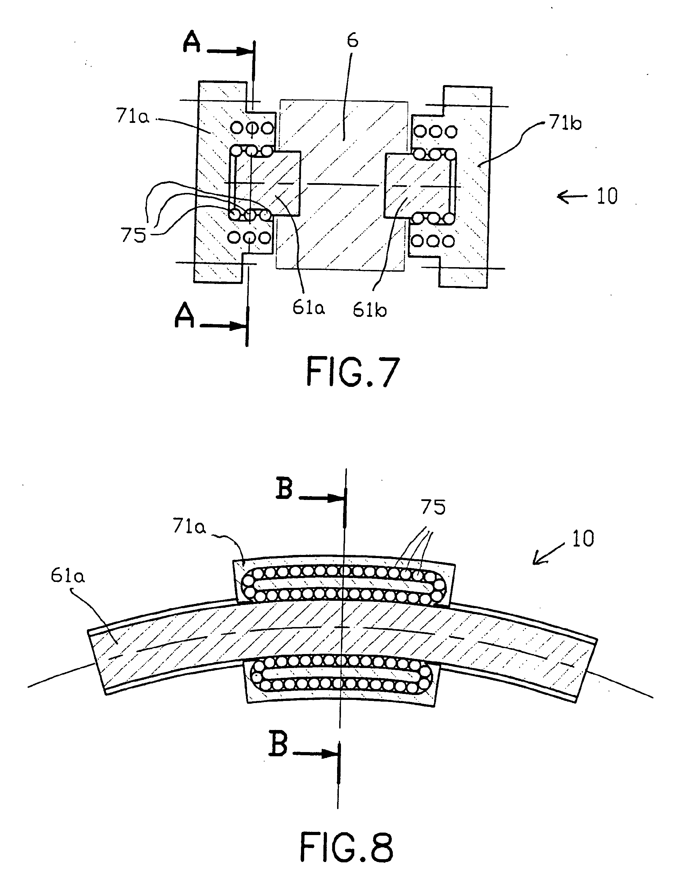

Naturellement, les glissières peuvent être simples comme décrit et représenté à la figure 6 ou bien doubles, c'est à dire comportant deux éléments guidés disposés en vis à vis comme sur la figure 3. Cette configuration à double glissière est représentée sur les figures 7 à 9

Les figures 7 à 12 représentent plusieurs exemples de glissières utilisables dans le dispositif de support de l'invention. l'homme du métier des glissières et roulements sait concevoir d'autres formes de glissières susceptibles d'être mises en oeuvre dans l'invention.

La figure 7 est une vue en coupe radiale (selon le plan B-B de la figure 8) d'une glissière courbe utilisable selon l'invention pour assujettir le porte-roue au support intermédiaire. Le guide 6 comporte un rail 61a et un rail 61b fixés de part et d'autre. De préférence, les éléments guidés sont des chariots 71a et 71b assujettis aux rails par l'intermédiaire de billes 75 circulant dans des chemins de billes. On a représenté ici 3 chemins de billes parallèles pour chaque chariot. L'homme du métier des roulements peut concevoir et dimensionner de telles glissières en fonctions des efforts et des conditions de fonctionnement prévus. Les glissières simples représentées sur la figure 6 peuvent être constituées par la moitié du système double de la figure 7.

La figure 8 est une vue en coupe (selon A-A sur la figure 7) dans le plan d'un chemin de bille. On voit bien ici le principe du guidage du chariot 71a par rapport au rail 61a grâce à la circulation des billes 75. La courbure du rail 61a détermine la trajectoire du chariot par rapport au guide 6 et on comprend bien que le centre de cette courbure constitue le centre de la rotation relative. On a représenté ici une courbure constante, de sorte que le centre de rotation est fixe. Si cependant le rail n'est pas circulaire, la rotation du chariot par rapport au guide 6 s'effectue autour d'un centre instantané de rotation dont la position est variable. Dans ce cas, le chariot doit naturellement pouvoir fonctionner sur un rayon variable.

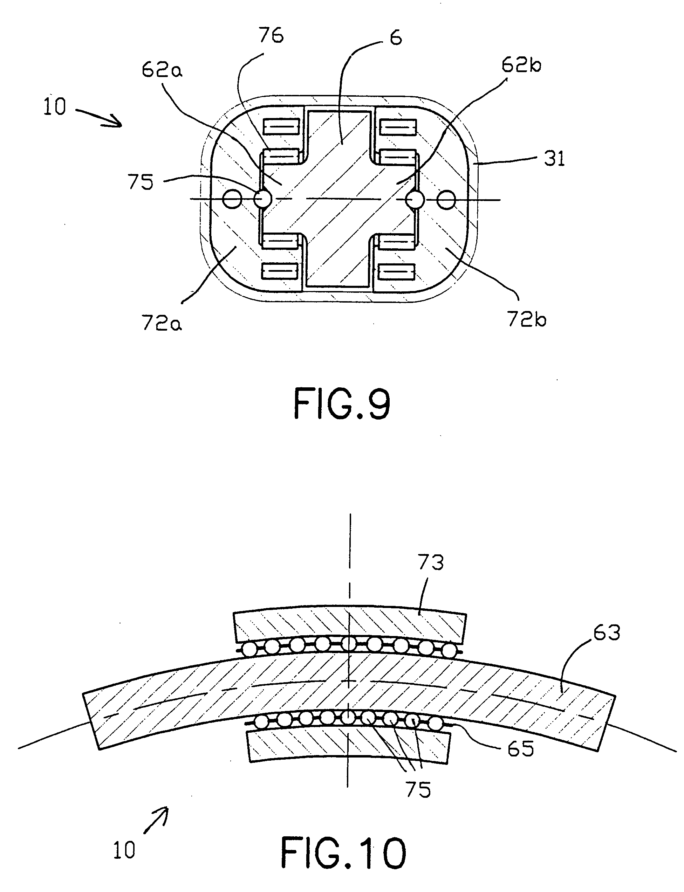

La figure 9 représente une vue en coupe similaire à celle de la figure 7 d'un autre mode de réalisation de glissière double. Sur cet exemple, le guide 6 est monobloc avec les rails 62a et 62b. Les chariots 72a et 72b sont guidés radialement par une circulation de rouleaux 76 et latéralement par une circulation de billes 75. Un fourreau 31 permet de relier les chariots au porte-roue 3. Il peut être intégré au porte-roue ou y être fixé par tout moyen. Ce fourreau 31 peut également assurer une partie de l'étanchéité utile au bon fonctionnement de la glissière.

La figure 10 est une vue en coupe similaire à celle de la figure 8 d'un autre mode de réalisation de glissière simple ou double dans lequel le mouvement relatif du chariot 73 par rapport au rail 63 est permis par l'interposition d'une cage 65 à billes 75 ou à rouleaux. Dans le cas de billes, la section du rail peut être ronde si l'on utilise au moins deux rails par roue. Si l'on utilise des rouleaux, le rail et le chariot auront de préférence des surfaces de roulement cylindriques par exemple comme sur la figure 9. Pour garantir le positionnement de la cage lors du mouvement, la précontrainte doit être suffisante pour empêcher tout glissement. Alternativement, la position de la cage peut être contrôlée par des butées ou par des moyens d'indexation quelconques afin qu'un éventuel décalage de la cage soit empêché ou corrigé le cas échéant.

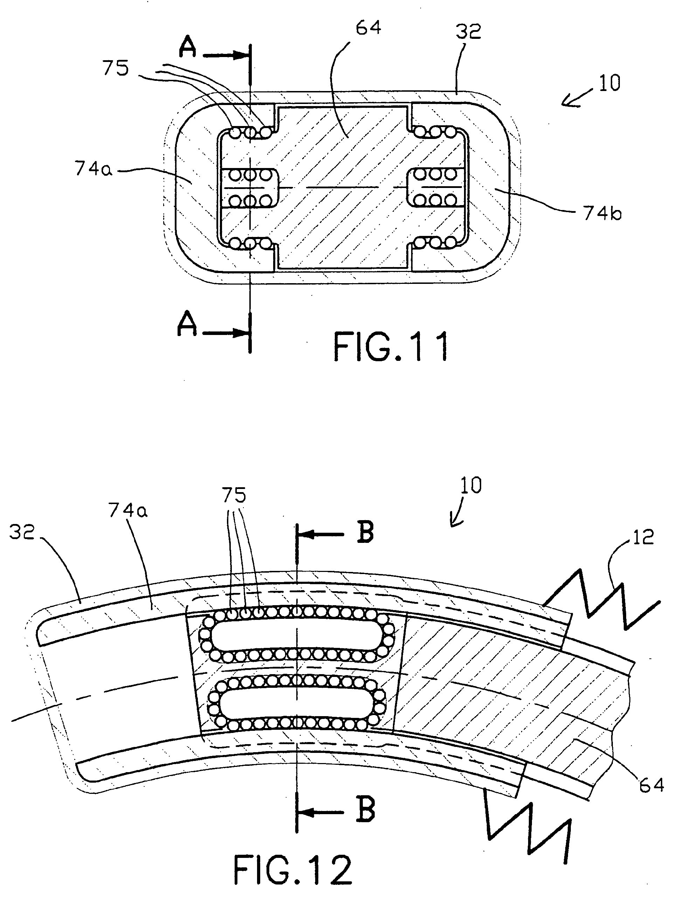

Un autre mode de réalisation de la glissière est représentée sur les figures 11 et 12. La figure 11 est une vue en coupe radiale (plan B-B sur la figure 12) d'une glissière courbe utilisable selon l'invention pour assujettir le porte-roue au support intermédiaire. Ce mode de réalisation fonctionne à l'inverse de ceux décrits précédemment. En effet, l'élément mâle 64 porte ici le système de circulation des billes 75 de manière similaire aux chariots décrits précédemment alors que les éléments femelles 74a et 74b portent les pistes de roulement des billes et constituent donc des rails creux. On a représenté ici 3 chemins de billes parallèles pour chaque chariot. L'homme du métier des roulements peut concevoir et dimensionner de telles glissières en fonctions des efforts et des conditions de fonctionnement prévus.

La figure 12 est une vue en coupe (selon A-A sur la figure 11) dans le plan d'un chemin de bille. On voit bien ici le principe du guidage de l'élément mâle 64 par rapport au rail 74a grâce à la circulation des billes 75. La courbure du rail 74a définit la trajectoire de l'élément mâle 64. on comprend bien que le centre de cette courbure constitue le centre de la rotation relative. On a représenté ici une courbure circulaire, de sorte que le centre de rotation est fixe. Le fourreau 32 permet de relier les rails 74a et 74b au porte-roue 3. Il peut être intégré au porte-roue ou y être fixé par tout moyen. Ce fourreau 32 peut également assurer une partie de l'étanchéité utile au bon fonctionnement de la glissière en coopération avec le soufflet 12 de la manière décrite à la figure 2.

Les figures 7 à 12 permettent également d'illustrer le fait que la ou les glissières peuvent assurer leur fonction d'articulation du porte-roue par rapport au support intermédiaire selon une infinité de configurations possibles. En particulier, la question de savoir quelle partie de la glissière est liée au porte-roue et quelle autre est liée au support intermédiaire et une question d'optimisation de la construction mécanique en fonction des caractéristiques du véhicule.

Cependant, la fonction de glissière peut naturellement être assurée par une mécanisme glissant. Par exemple, la partie mâle de la glissière peut être ajustée de manière glissante dans la partie femelle. Un état de surface très lisse combiné à un traitement connu en soi (Teflon™, Xylan™ ou autre polymères utilisables dans ce but) et/ou à une lubrification (huile, graisse) peut permettre d'obtenir le fonctionnement recherché. La section de la glissière est alors de préférence rectangulaire pour assurer le guidage selon les différentes directions et permettre un usinage simple.

Cette manière de construire la glissière 10 peut être préférée à l'emploi d'un roulement du point de vue de l'encombrement. En effet, l'espace disponible en particulier entre la jante et le disque de frein est réduit. Egalement du point de vue de la robustesse, une solution "glissante" présente l'avantage d'une plus grande surface de contact par rapport aux billes ou rouleaux et donc une moindre grande sensibilité au matage.

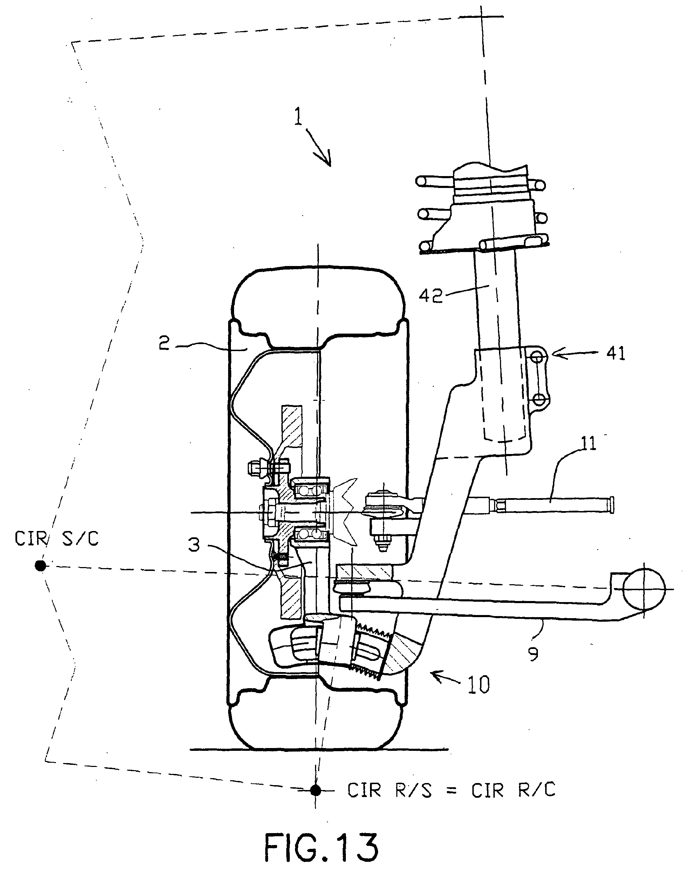

La figure 13 représente un autre mode de réalisation du dispositif de suspension de l'invention. Sur cet exemple, le mouvement de débattement de suspension est assuré par une jambe de force MacPherson 41 et un bras ou triangle inférieur 9 de façon connue en soi. Sur cette jambe de force est articulé un porte-roue 3 par l'intermédiaire d'une glissière courbe 10 par exemple identique à celle décrite à la figure 2. La jambe de force 41 constitue dans ce mode de réalisation le support intermédiaire 4 des figures précédentes. Par analogie avec l'étude cinématique de la figure 1, le mouvement de débattement de suspension de la jambe de force 41 admet par rapport à la caisse du véhicule un troisième centre instantané de rotation (CIR S/C) à l'intersection de l'axe du bras ou triangle inférieur 9 et de la normale à l'axe du vérin 42 de la jambe de force 41. Comme sur la figure 2, on a représenté une glissière circulaire.

Comme la géométrie ne diffère de celle de la figure 2 que par la position du troisième centre instantané de rotation (CIR S/C), l'analyse cinématique du fonctionnement en carrossage de ce dispositif de suspension conduit aux mêmes constatations que celles décrites aux figures 2 à 5. Cette figure illustre bien le fait que le dispositif de support de l'invention peut être mis en oeuvre en relation avec la plupart des systèmes de suspension puisque son fonctionnement intervient principalement pour permettre un degré de liberté supplémentaire entre le porte-roue et la « suspension » au sens classique du terme. Le support intermédiaire 4 assurant, vis à vis de la suspension, la fonction assurée par le porte-roue dans l'état de la technique.

La figure 14 représente schématiquement un véhicule équipé au moins sur l'un de ses essieux, du dispositif de suspension de l'invention. Si l'on considère qu'il s'agit d'une vue arrière, cette situation correspond au cas où ce véhicule est engagée dans une courbe à droite. La caisse 5 du véhicule subit alors un roulis de manière tout à fait connue vers l'extérieur du virage, c'est à dire que la caisse s'incline vers la gauche. Les roues 2a et 2b subissent respectivement un effort transversal Fya et un effort transversal Fyb dirigé vers l'intérieur de la courbe, c'est à dire vers la droite de la figure. Lorsque les centres instantanés de rotation (CIR Ra/C et CIR Rb/C) des mouvements de carrossage des roues 2a et 2b par rapport à la caisse 5 sont situés sous le sol S, ces efforts Fya et Fyb génèrent une inclinaison des roues par rapport à la caisse vers l'intérieur du virage comme décrit aux figures 4 et 5. Cette inclinaison est à l'inverse de celle provoquée par le roulis. Ainsi, on peut constater une compensation partielle, totale ou surabondante du roulis. La mesure de cette compensation passive est bien sûr fonction de la configuration retenue, c'est à dire de la position des centres instantanés de rotation et des raideurs qui s'opposent au mouvement. Le cas représenté correspond à une un compensation largement surabondante puisque malgré le roulis de caisse, les roues s'inclinent nettement vers l'intérieur du virage.

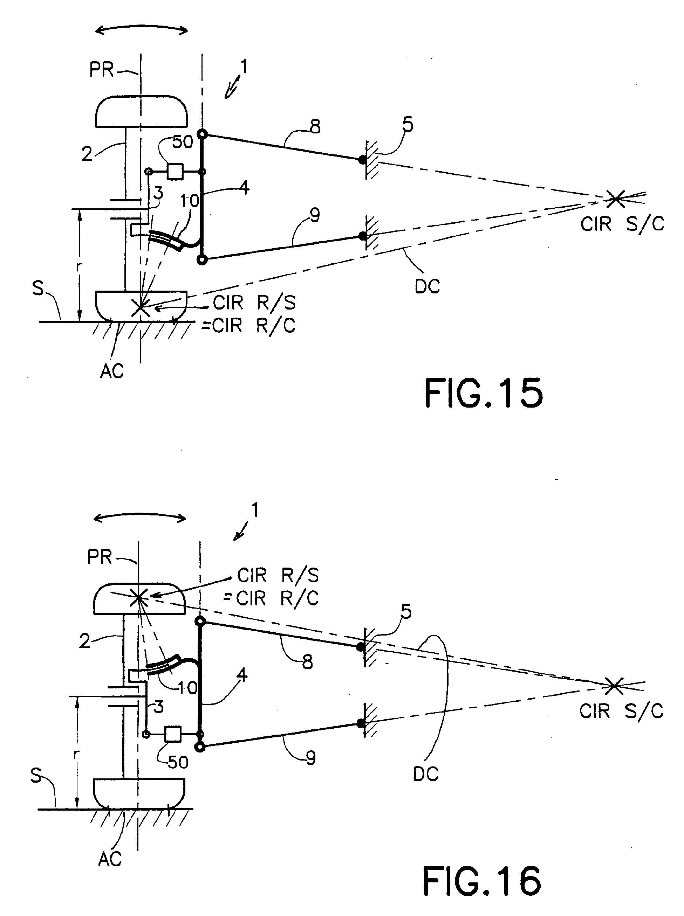

La figure 15 décrit selon le même type de schéma qu'à la figure 1, une autre géométrie particulière de dispositifs de support et de suspension selon l'invention. Sur cet exemple, la glissière 10 définit une rotation du porte-roue 3 par rapport au support intermédiaire 4 autour d'un premier centre instantané de rotation (CIR R/S) situé sensiblement dans le plan de la roue PR et au dessus du sol S. Dans ces conditions et selon les principes cinématiques exposés plus haut, le deuxième centre instantané de rotation (CIR R/C) est confondu avec le premier et sa position au dessus du sol fait que les efforts transversaux qui s'appliquent à la roue au niveau de l'aire de contact AC tendent à incliner les roues à l'inverse de l'effet recherché par l'invention. Le fonctionnement d'une telle géométrie doit alors être contrôlée de manière active à l'aide par exemple d'un vérin 50. Le moyen de contrôle actif 50 agit de préférence entre le support intermédiaire 4 et le porte-roue 3 comme représenté et peut être commandé en fonction de paramètres de roulage du véhicule. Naturellement, cette alternative n'est pas limitée au cas de la figure 15 mais peut être adapté à tout autre mode de réalisation.

Dans le cas d'un contrôle actif, la position du deuxième centre instantané de rotation (CIR R/C) du mouvement de carrossage se situe avantageusement au niveau du sol S ou au dessus de ce niveau mais à une distance réduite pour permettre un contrôle à faible énergie et pour limiter la variation de demie voie occasionnée par les mouvements du plan de roue.

La figure 16 représente une configuration différente du dispositif de suspension de la figure 15 d'une manière permettant une comparaison graphique directe. Le système de la figure 16 est en effet configuré de façon à ce que le mouvement de carrossage se fasse autour d'un point situé dans la partie haute du plan de roue PR. Selon les mêmes principes qu'exposés plus haut, on peut déterminer la position du centre instantané de rotation du mouvement de carrossage de la roue 2 par rapport à la caisse 5 (CIR R/C). Un avantage de cette configuration est un encombrement réduit lors du débattement de carrossage au niveau de la partie supérieure de la roue. En effet, dans cet exemple, la rotation du plan de roue s'effectue autour d'un point (CIR R/C) situé à proximité ou même dans la section de la partie supérieure de la roue 2. Ainsi, lors du carrossage , la partie supérieure de la roue 2 ne se déplace pratiquement pas par rapport à la caisse et le cas échéant par rapport à l'aile ou au passage de roue de la carrosserie du véhicule. Seul le débattement vertical de la suspension doit alors être pris en compte dans le dessin de la carrosserie. Un autre avantage des configurations actives des figures 15 et 16 concerne la variation de demi-voie lors des mouvements de carrossage. Si, dans une situation telle qu'une courbe à droite (comme représenté à la figure 4), le moyen de contrôle actif 50 impose à la roue 2 un carrossage négatif, ce mouvement de carrossage se faisant autour d'un point (CIR R/C) situé au dessus du sol S, le bas de la roue (et donc l'aire de contact) est alors repoussé (par rapport à la caisse 5) vers l'extérieur de la courbe. Ceci correspond à ce que l'on appelle une variation de demi-voie positive. Cette caractéristique peut être avantageuse pour la stabilité du comportement du véhicule et elle présente l'avantage de combattre le transfert de charge par un déplacement du centre de gravité de la caisse 5 vers l'intérieur de la courbe. Ainsi, la surcharge de la roue extérieure vis à vis de la roue intérieure au virage est réduite. Ceci est un facteur positif pour le potentiel d'adhérence global de l'essieu.

Comme on l'a vu, on choisit de préférence, en fonction du fonctionnement souhaité, une position du premier centre instantané de rotation du degré de liberté de carrossage (CIR R/C) dans un intervalle allant de r au dessus du sol à r sous le sol (r étant le rayon de la roue). Le fait de positionner ce point près du sol permet de limiter la variation de voie. Par exemple, dans le cas d'un premier centre instantané de rotation situé à une distance "r" du sol et pour une roue de 300 mm de rayon, un carrossage de 5° provoque un déport de l'aire de contact par rapport à la caisse (c'est à dire une variation de demie voie) d'environ 25 mm. On a constaté que cette valeur doit être considérée comme une limite à ne pas dépasser. Cependant, lorsque le premier centre instantané de rotation du degré de liberté de carrossage (CIR R/C) se situe au dessus du sol, c'est à dire que le dispositif de l'invention doit comporter un actionneur afin d'orienter activement le carrossage du plan de roue (voir plus haut la description des figures 3 et 4), des expérimentations ont montré qu'au delà d'une certaine hauteur, la puissance nécessaire à ce fonctionnement actif rend le système trop consommateur d'énergie. Cette hauteur limite s'est avérée correspondre sensiblement à un rayon de roue. Avantageusement encore en matière d'énergie nécessaire et d'importance de la variation de voie, la position du premier centre instantané de rotation (CIR R/C) du degré de liberté de carrossage se situe au niveau du sol S ou au dessus de ce niveau mais à une distance réduite, par exemple une distance correspondant à 0.1 r.

Au contraire, si le critère énergétique n'est pas prépondérant, on peut préférer mettre en oeuvre l'invention dans les conditions cinématiques décrites à la figure 16. Dans ce cas, le centre instantané de rotation (CIR R/C) se situe avantageusement dans un intervalle allant de r à 2.5 r au dessus du sol, de préférence entre 1,5 r et 2 r dans le but de permettre un encombrement minimal sous les ailes du véhicule.

On comprend que selon l'importance relative des différents critères, on peut déterminer un compromis entre l'encombrement, l'énergie nécessaire et les contraintes de conception mécanique et que ce compromis correspondra à une certaine hauteur du centre instantané de rotation (CIR R/C) du mouvement de carrossage de la roue par rapport à la caisse dans la gamme décrite allant de r sous le sol à 2,5 r au dessus du sol. Par exemple, une position du centre instantané de rotation (CIR R/C) très proche du niveau de l'axe de la roue permet de faire travailler une éventuelle transmission dans des conditions conventionnelles. Au contraire, plus ce point de pivotement sera éloigné du centre de la roue, plus les variations de distance entre la caisse et le porte-roue seront importantes lors des mouvements de carrossage et imposeront des contraintes de conceptions supplémentaires quant aux transmissions.

Lorsqu'un moyen de contrôle 50 est mis en oeuvre dans un dispositif de configuration passive (par exemple, celui de la figure 1), il peut avoir un rôle de régulation des mouvements de carrossage provoqués de manière passive et dans le sens recherché par les efforts transversaux comme cela est exposé par les figures 4 et 5. Le moyen de contrôle 50 peut alors prendre la forme d'un amortisseur de carrossage ou d'un ressort dont l'action tend à limiter l'inclinaison ou à maintenir un angle de carrossage déterminé en l'absence d'effort latéral Fy.

Qu'il soit passif ou actif, le moyen de contrôle, s'il est pilotable, peut être commandé en fonction de divers paramètres de roulage du véhicule (par exemple vitesse, accélération longitudinale ou transversale, position du volant, vitesse de rotation du volant, couple exercé sur le volant, roulis, vitesse de roulis, accélération de roulis, lacet, vitesse de lacet, accélération de lacet, efforts sur les roues y compris la charge verticale, type de conduite ou comportement souhaité par le conducteur).

Les moyens de contrôle (représentés schématiquement sur les figures par un vérin télescopique 50) peuvent prendre diverses formes. On peut par exemple mettre également en oeuvre des vérins télescopiques ou rotatifs, hydrauliques ou électriques, des moteurs linéaires, des systèmes à vis entraînés par des moteurs électriques ou hydrauliques ou des moteurs électriques asynchrones auto-pilotés. Naturellement, les différents types de moyens de contrôle peuvent être librement combinés aux différentes configurations possibles du dispositif de l'invention bien que pour diverses raisons comme le coût ou la robustesse, certaines de ces combinaisons sont particulièrement avantageuses.

Le moyen de contrôle peut également être intégré à la glissière 10, par exemple sous la forme d'un ensemble pignon-crémaillère commandé par un moteur électrique.

Suivant une construction similaire, le moyen de contrôle peut comprendre un moyen de mesure des mouvements de carrossage. Dans le cas de mouvements de carrossage provoqués par les efforts transversaux, cette mesure permet par des méthodes connues en soi de connaître ces efforts. De même dans les configurations utilisant un moyen de contrôle actif, on peut de manière connue en soi mesurer l'effort transmis par le moyen de contrôle actif et en déduire les efforts transversaux s'exerçant sur la roue dans l'aire de contact. Cette information est utile par exemple pour piloter des systèmes de sécurité ou de régulation du comportement du véhicule et naturellement ,le cas échéant, pour piloter le moyen de contrôle du carrossage.

Dans les cas de fonctionnement passif tels que décrits plus haut, une façon de vérifier le fonctionnement du dispositif de l'invention (et de mesurer sa sensibilité) est d'exercer un effort transversal (à l'aide, par exemple, d'une plaque à billes) au niveau de l'aire de contact de la roue d'un véhicule équipé du dispositif de l'invention et de mesurer la variation de l'angle de carrossage.

Une particularité intéressante de l'invention est qu'elle est applicable à tous les schémas de suspensions connus puisque l'on ajoute à ces systèmes existants des éléments supplémentaires permettant un degré de liberté de carrossage en plus du degré de liberté de débattement de suspension existant. Un avantage de ces dispositifs de support et de suspension est leur compacité qui permet de ne pas remettre en question la conception des véhicules courants. De plus, l'utilisation d'une glissière courbe permet de positionner le centre de cette rotation en tout point du plan et en particulier à proximité du sol et même sous le sol. Un autre avantage de l'invention est qu'elle permet une variation du carrossage de chaque roue indépendamment des autres roues du véhicule et indépendamment du fait que la roue soit motrice et/ou directrice.

Les figures 1, 2, 4, 5, 13, 14, 15 et 16 représentent en projection sur un plan orthogonal au sol et transversal au véhicule passant par le point d'application de la résultante des forces dans l'aire de contact, les principes et plusieurs modes de réalisation de l'invention. Cette représentation en deux dimensions est avantageuse afin d'illustrer clairement les caractéristiques essentielles de l'invention dont l'objectif est une variation contrôlée du carrossage. Dans cette représentation, le mouvement de carrossage est une rotation dans le plan autour d'un point de pivot (centre instantané de rotation). Il ne faut cependant pas oublier qu'une rotation s'effectue en réalité (en trois dimensions) autour d'un axe de pivot, réel ou virtuel (axe instantané de rotation). Cet axe est représenté par un point dans la représentation plane. Cet axe peut être construit sensiblement parallèle au plan du sol et à l'axe longitudinal du véhicule pour permettre les variations de carrossage visées (comme cela apparaît à la description des figures 3 et 6). Cependant, en faisant varier l'orientation de cet axe, on peut créer des effets supplémentaires de braquage, de pince, d'ouverture ou d'enroulement en fonction des efforts transversaux (courbe) et longitudinaux (freinage, accélération) subis par la roue dans l'aire de contact. L'homme du métier sait, en procédant à des essais et/ou par des méthodes théoriques, déterminer l'orientation qu'il convient d'adopter en fonction du comportement qu'il attend de ce dispositif. Des expérimentations ont par exemple montré qu'une inclinaison de 6° de cet axe de pivot de carrossage par rapport à l'horizontale permet d'induire un braquage lié au carrossage, selon un angle 10 fois inférieur à celui du carrossage. Ainsi lorsque les efforts transversaux induisent un carrossage de 5°, le braquage induit est d'environ 0.5°. L'inclinaison de l'axe de pivot peut être obtenu par exemple en équipant le véhicule d'un dispositif dont le plan de fonctionnement est incliné de 6° par rapport à la verticale. Au delà de cet exemple, le choix de l'angle d'inclinaison de cet axe de pivot peut, de manière générale, permettre un réglage fin du compromis d'équilibre dynamique (par exemple dans le but de tenir compte des poussées transversales telles qu'exposées plus haut).

Le dispositif de support ou le dispositif de suspension de l'invention peut être mis en oeuvre dans le but de compenser les déformations des éléments de la liaison au sol des véhicules actuels et permettre de meilleures performances. C'est à dire que l'on peut employer le dispositif de support ou le dispositif de suspension de l'invention pour garantir que le plan de roue reste, en toutes circonstances, sensiblement orthogonal au plan du sol ou légèrement incliné pour tenir compte également de la déformation du pneumatique. Ce but est atteint par un dispositif selon l'invention dont l'amplitude de carrossage utile est de quelques degrés seulement (par exemple, 8° de part et d'autre de 1a position moyenne). Mais, le dispositif de support ou le dispositif de suspension de l'invention peut également être mise en oeuvre dans le but de permettre une variation bien plus importante du carrossage, c'est à dire permettre un fonctionnement de la liaison au sol plus proche de celui d'une motocyclette que de celui des véhicules à trois roues et plus, actuellement sur le marché.

D'une façon générale, les figures représentent une roue 2 comportant un bandage pneumatique mais l'invention s'adresse naturellement à tout type de roue avec ou sans bandage élastique, pneumatique ou non pneumatique, une caractéristique essentielle du dispositif de suspension de l'invention étant la position du deuxième centre instantané de rotation par rapport à l'aire de contact, quelle qu'elle soit.

## Revendications

1. Dispositif de support destiné à lier une roue (2) à des éléments de suspension (4, 8, 9) d'un véhicule, ledit dispositif de support comprenant un porte-roue (3) et des moyens de carrossage (10) conférant à ladite roue un degré de liberté de carrossage par rapport aux dits éléments de suspension, lesdits éléments de suspension comprenant un support intermédiaire (4), **caractérisé en ce que**, lesdits moyens de carrossage comprennent au moins une glissière courbe (10) assujettissant ledit porte-roue (3) audit support intermédiaire (4).

2. Dispositif de support selon la revendication 1, ladite au moins une glissière courbe étant une glissière circulaire (10) comprenant au moins un roulement à billes, à galets et/ou à rouleaux.

3. Dispositif de support selon l'une des revendications précédentes, ladite roue (2) de rayon 'r' étant destinée à reposer au sol (S) par l'intermédiaire d'un aire de contact (AC), lesdits moyens de carrossage (3, 4, 10) étant configurés de manière à ce que ladite roue (2) admette, autour d'une position moyenne, un premier centre instantané de rotation (CIR R/S) situé dans un intervalle allant de 2.5 r au dessus du sol à r en dessous du sol et de préférence de 0.5 r au dessus du sol à r en dessous du sol.

4. Dispositif de support selon la revendication 3, lesdits moyens de carrossage étant configurés de manière à ce que ledit premier centre instantané de rotation (CIR R/S) soit situé, pour une position moyenne de la roue, sous le plan du sol (S).

5. Dispositif de support selon la revendication 4, lesdits moyens de carrossage étant configurés de manière à ce que ledit premier centre instantané de rotation (CIR R/S) soit situé transversalement sous ladite aire de contact (AC).

6. Dispositif de support selon l'une des revendications précédentes, ledit premier centre instantané de rotation (CIR R/S) étant situé sensiblement dans le plan de la roue (PR).

7. Dispositif de support selon l'une des revendications précédentes, ledit support intermédiaire étant constitué par une jambe de force (41) d'un système de suspension Macpherson.

8. Dispositif de support selon l'une des revendications précédentes, comportant en outre des moyens de contrôle (50) aptes à influencer le carrossage de la roue.

9. Dispositif de support selon la revendication 8, les moyens de contrôle comprenant un élément élastiquement déformable s'opposant au mouvement de carrossage.

10. Dispositif de suspension (1) pour véhicule comprenant un dispositif de support selon l'une des revendications précédentes.

11. Dispositif de suspension (1) selon la revendication 10 destiné à relier un porte-roue (3) à une caisse (5) d'un véhicule, ledit porte-roue étant destiné à porter une roue (2) de rayon 'r', ladite roue étant destinée à reposer au sol (S) par l'intermédiaire d'une aire de contact (AC), ledit dispositif de suspension comportant des moyens (4, 8, 9, 10) conférant au porte-roue, par rapport à la caisse, un degré de liberté de carrossage et un degré de liberté de débattement de suspension indépendants l'un de l'autre, ledit dispositif étant configuré de manière à ce que le mouvement de carrossage du porte-roue par rapport à la caisse admette, autour d'une position moyenne, un deuxième centre instantané de rotation (CIR R/C) situé dans un intervalle allant de 0.5 r au dessus du sol à r en dessous du sol.

12. Dispositif de suspension (1) selon la revendication 11, ledit deuxième centre instantané de rotation (CIR R/C) étant situé dans un intervalle allant de 0.2 r au dessus du sol à 0.4 r en dessous du sol.

13. Dispositif de suspension (1) selon l'une des revendications 11 et 12, ledit deuxième centre instantané de rotation (CIR R/C) du mouvement de carrossage du porte-roue (3) par rapport à la caisse (5) étant situé sous le plan du sol (S) afin que des efforts transversaux (Fy) exercés par le sol sur la roue (2) dans l'aire de contact (AC) induisent une inclinaison du porte-roue (3) par rapport à la caisse dans le sens d'une diminution de carrossage lorsque lesdits efforts transversaux sont dirigés vers l'intérieur du véhicule et dans le sens d'une augmentation de carrossage lorsque lesdits efforts transversaux sont dirigés vers l'extérieur du véhicule.

14. Dispositif de suspension (1) selon l'une des revendications 11 à 13, **caractérisé en ce que** ledit degré de liberté de carrossage est contrôlé par un moyen actif (50) en fonction de paramètres de roulage dudit véhicule.

15. Véhicule équipé d'un dispositif de suspension (1) selon l'une des revendications 10 à 14.
